# EUROPEAN PATENT SPECIFICATION

(11) **EP 2 624 386 B1**
(45) Date of publication and mention of the grant of the patent: **24.12.2014**
(21) Application number: 12153488.7
(22) Date of filing: 01.02.2012
(51) Int. Cl.: H02B 1/38, H01H 9/20

(54) **Interlocking device for a switchgear**
Verriegelungsvorrichtung für ein Schaltgetriebe
Dispositif d'interverrouillage pour appareillage électrique

(43) Date of publication of application: 07.08.2013
(73) Proprietor: ABB Technology AG, 8050 Zürich (CH)
(72) Inventor: Carelli, Vittorio, 26900 Lodi (IT); Colleoni, Roberto, 24067 Sarnico (BG) (IT); Rambaldini, Simone, 20037 Paderno Dugnano (MI) (IT)
(74) Representative: Crugnola, Pietro

(56) References cited:
- GB-A- 2 308 863
- US-A- 5 944 397

## Description

The present invention relates to an interlocking device for a switchgear, in particular configured for enabling opening/closing of a first compartment and of a second compartment of the switchgear in a controlled manner.

A switchgear is known having a medium voltage compartment - in which electrical cables/rods of a circuit breaker are housed - which is accessible through a hinged door, and a low voltage compartment - in which terminal boards, control components are housed - which is accessible through a removable cover. The switchgear is provided with a disconnector-switch which can be manually operated through an operating mechanism in order to put the switchgear in an earthing configuration.

A locking device is provided which is mechanically linked to the above mentioned operating mechanism and which enables to open the hinged door of the medium voltage compartment only when the disconnector-switch is put in the earthing configuration, thus allowing an intervention of an operator on the switchgear.

When an intervention is required, the operator must put the switchgear in the earthing configuration by acting on the operating mechanism of the disconnector-switch, thereby enabling opening of the hinged door.

If access to the low voltage compartment is also required, the operator has to unscrew and remove a safety screw or bolt which is coupled internally with the removable cover and which keeps the latter fixed to the switchgear casing. The safety screw is provided inside the low voltage compartment and can be reached by the operator from inside the medium voltage compartment, i.e. when the hinged door is open. The so arranged safety screw prevents the removable cover from being opened accidentally unless the operator opens first the hinged door, i.e. in the earthing configuration, and removes the safety screw.

Once the intervention on the switchgear is over, the operator has to put back the removable cover in its place, in order to close again the low voltage compartment, and, before closing the hinged door, he must remember to retrieve and insert the safety screw for fastening the removable cover to the switchgear casing. The hinged door can subsequently be closed and the switchgear can be put into service again.

Although the known switchgear performs in a quite satisfying way, there is still room for further improvements, in particular as regard to increasing safety, facilitating and speeding up the intervention procedure, when operators are requested to open the hinged door and the removable cover for intervening on the components inside the switchgear.

This issue is faced by an interlocking device as defined in the appended claims and described hereinafter in details.

The present disclosure encompasses also a switchgear casing provided with said interlocking device, and a switchgear, equivalently called with the term panel or cabinet or switchboard, comprising a circuit breaker, a disconnector-switch and said interlocking device as well. Document US5944397 discloses a device according to the preamble of claim 1.

Characteristics and advantages of the present disclosure will result from the description and from claims.

The present disclosure can be better understood and implemented with reference to the attached drawings that illustrate some embodiments thereof by way of non-limiting examples, in which:
Figure 1 is a fragmentary and cutaway view from an internal perspective of a switchgear provided with an interlocking device according to the invention;
Figure 2 is an enlarged detail of Figure 1;

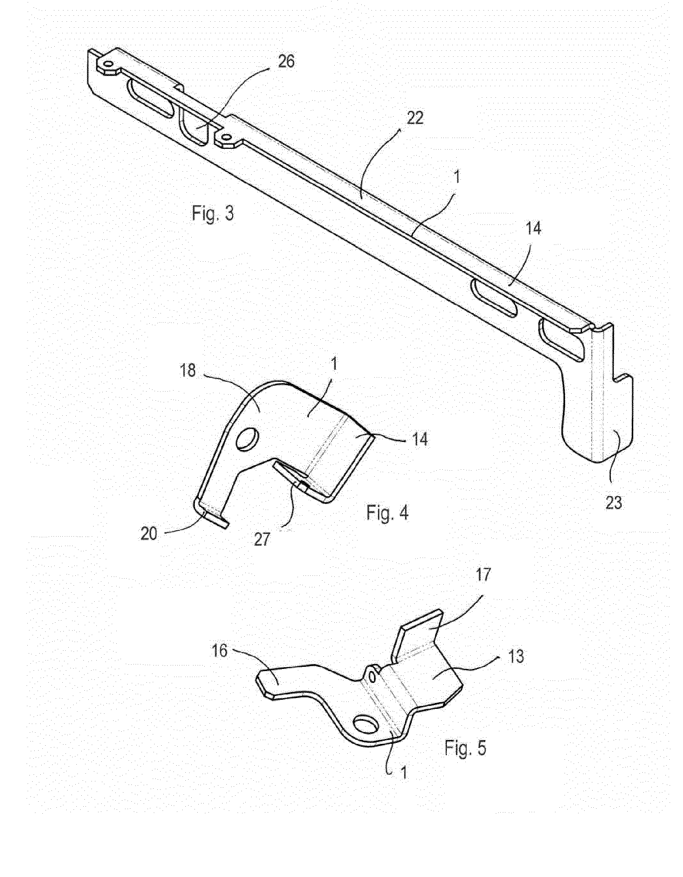

Figures 3 to 5 show parts of the interlocking device of the invention;

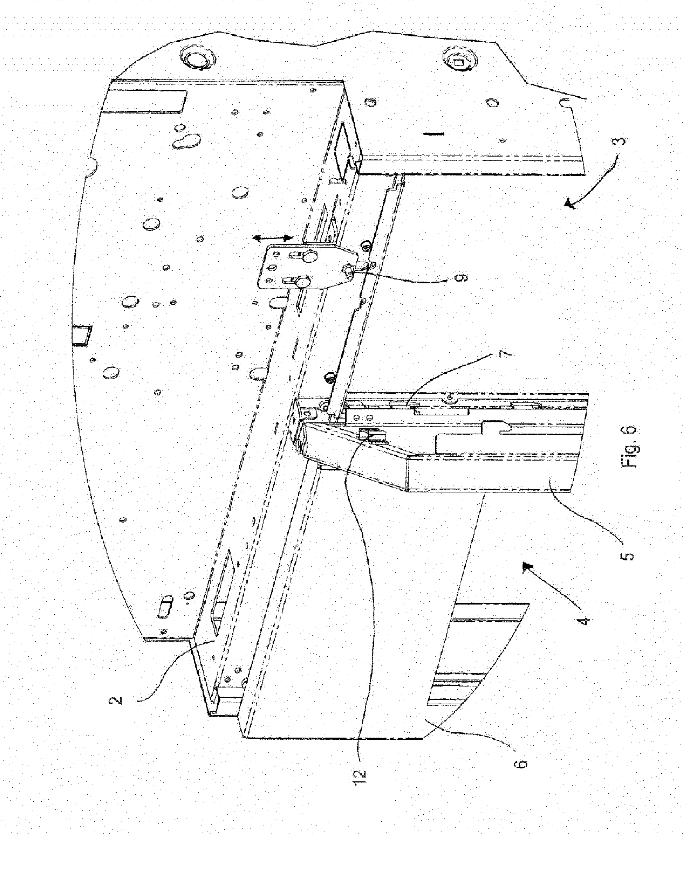

Figure 6 is a fragmentary and cutaway view from an external perspective of the switchgear provided with the interlocking device according to the invention, in which a hinged door of a medium voltage compartment and a removable cover of a low voltage compartment are partially shown;
Figure 7 shows part of the interlocking device in a first operative configuration in which both the removable cover and the hinged door are in a closed position;
Figures 8 and 9 show, from different perspectives, the interlocking device in a second operative configuration in which the hinged door is opened and the removable cover closes the low voltage compartment;
Figure 10 shows the interlocking device in a third operative configuration in which both the high voltage compartment and the low medium voltage are opened, i.e. the hinged door is opened and the cover is removed from the low medium voltage compartment;
Figure 11 shows the interlocking device in a configuration preventing the hinged door from closing the high voltage compartment when the cover is removed from the low medium voltage compartment;
Figure 12 is an enlarged view of a particular of Figure 11.

It should be noted that in the detailed description that follows, in order to clearly and concisely disclose the present invention, the drawings may not necessarily be to scale and certain features of the disclosure may be shown in somewhat schematic form.

With reference to the attached Figures, an interlocking device 1 is shown, which is suitable for being mounted in a casing 2 of a medium voltage switchgear including a circuit breaker, where, for the purposes of the present application, the term medium voltage refers to applications in the range from 1kV up to some tens of kV, e.g. 36 kV. The interlocking device 1 is particularly suitable for a switchgear comprising a first compartment 3 suitable for containing one or more first electrical and/or electronic devices, namely a medium voltage compartment 3 in which electrical cables/rods, fuses or other components of the circuit breaker are contained, and a second compartment 4 suitable for containing one or more second electrical and/or electronic devices, namely a low voltage compartment 4, in which terminal boards and/or control components and the like are contained.

The switchgear comprises a disconnector-switch which can be manually operated through an operating mechanism in order to put the switchgear in an electrical earthing status for allowing for example intervention of an operator.

The switchgear comprises a hinged door 5 which is pivotally connected to the casing 2 for opening/closing the medium voltage compartment 3 and, a removable cover 6 which can be coupled with, and separated from the casing 2 in order to close and open the low voltage compartment 4.

The hinged door 5 and the removable cover 6 are of the type comprising hook means, provided on respective vertical edges thereof, the hook means being configured for engaging with respective stationary seat means obtained on frame portions, e.g. vertical uprights, of the casing 2.

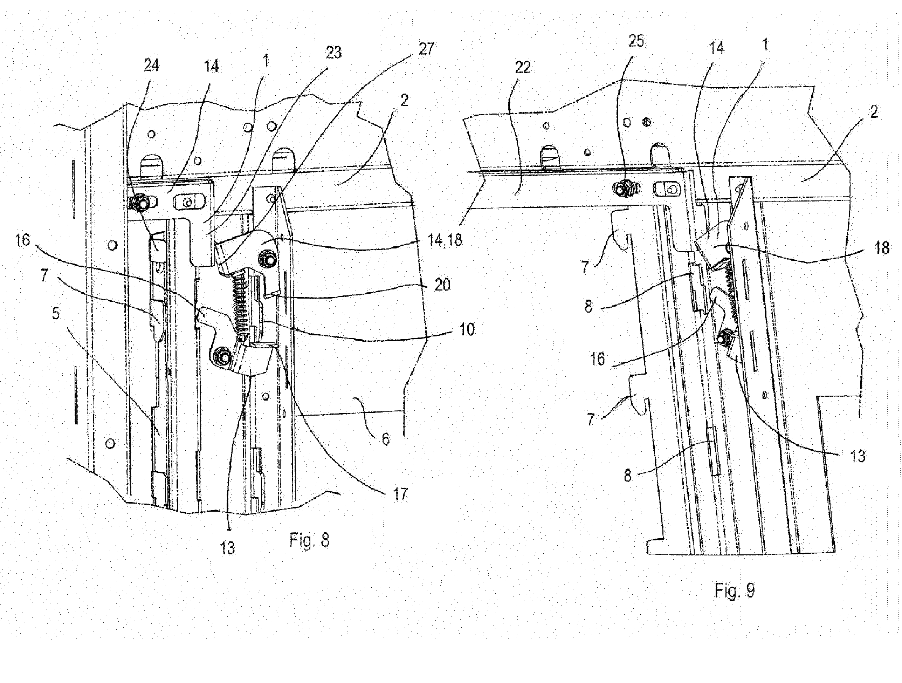

Figures 8 and 9 show the hinged door 5 having, on a first vertical edge which is hinged to the casing 2, first hooks 7 for engaging, in a closed position, with stationary first seats 8 obtained on the casing 2. In the exemplary embodiment illustrated, the hinged door 5, in the closed position, is lowered in such a way that the first hooks 7 engage with the corresponding first seats 8.

Likewise, on vertical edges of the removable cover 6, second hooks 10 protrude downwards which are configured for engaging with stationary second seats 11 obtained on the casing 2, as shown in Figure 8.

A safety-pin-group 9 is vertically movable by the abovementioned operating mechanism between a raised position, corresponding to the earthing status of the switchgear which is possible owing to the disconnector-switch, and a lowered position, corresponding to an in-service-status of the switchgear. The safety-pin-group 9, when arranged in the lowered position, by engaging with a plate element 12 fixed to the hinged door 5, blocks the latter in its closed position thus preventing lifting up and rotation thereof. Therefore, the safety-pin-group 9 operatively connected to the operating mechanism of the disconnector-switch enables to open the hinged door 5 only when the earthing status is achieved. In the earthing status, the hinged door 5 can be lifted up for disengaging the first hooks 7 from the first seats 8, and then can be rotated thus allowing access to the medium voltage compartment 3. Vice versa, it the hinged door 5 is not closed, the disconnector-switch cannot be operated for putting the switchgear in the in-service-status.

The interlocking device 1 of the invention, described in the following, enables to furthermore increase the safety conditions for an operator, by imposing a controlled procedure, namely a specific and determined sequence of the opening/closing operations for the hinged door 5 and the removable cover 6 which must be compulsorily followed by the operator, as will result in the description which follows. The interlocking device 1 comprises obstruction-locking means 13 configured for preventing the hinged door 5 from closing the medium voltage compartment 3 if the removable cover 6 is not in a closing position in which access to the low voltage compartment 4 is hindered. For "closing position" a position of the removable cover 6 is meant in which the second hooks 10 are received in the respective second seats 11 and are in a lowered position engaging with the latter.

The interlocking device 1 also comprises block-locking means 14 operatively connected to the obstruction-locking 13 and configured for blocking the removable cover 6 in the closing position when the hinged door 5 is closed and hinders access to the medium voltage compartment 3.

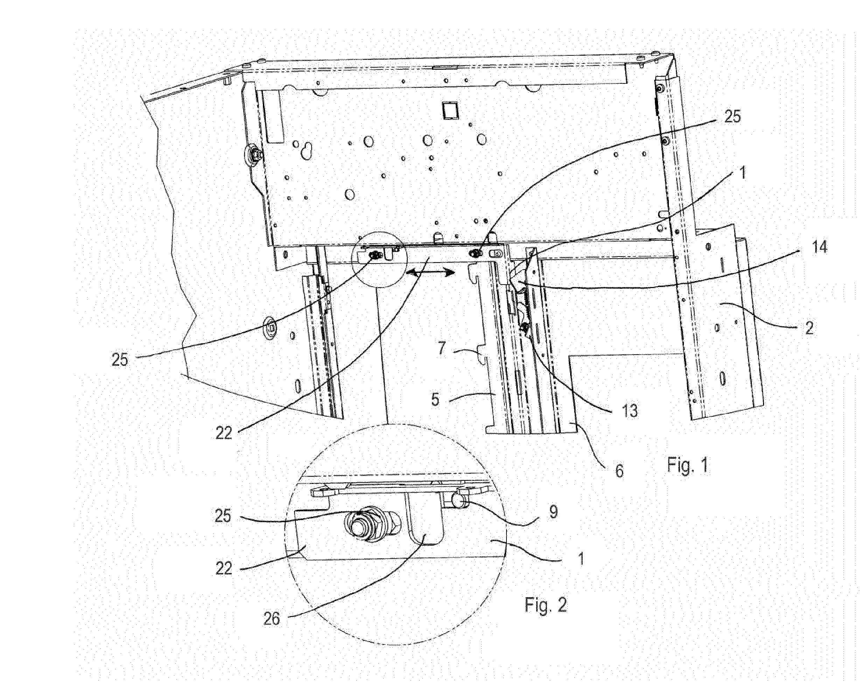

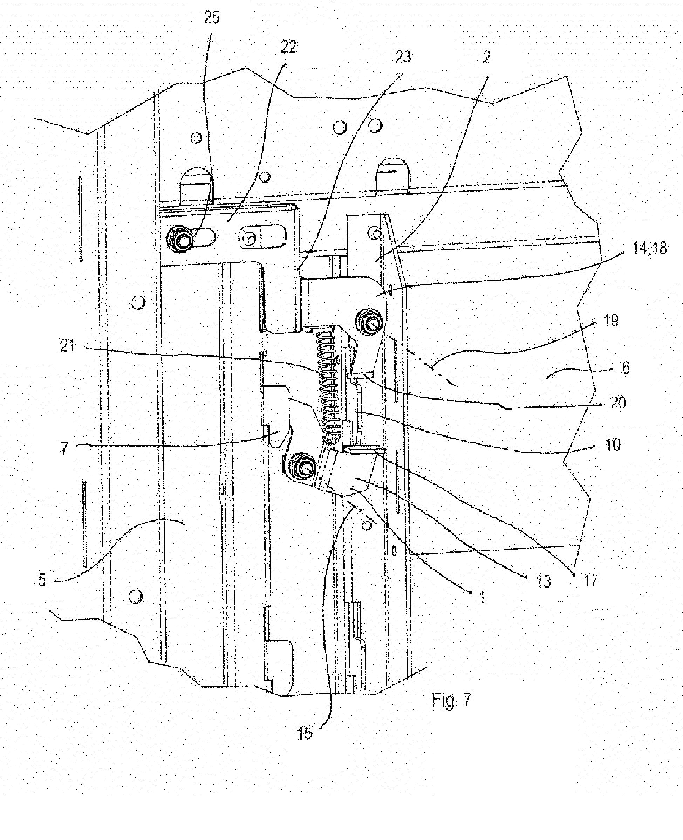

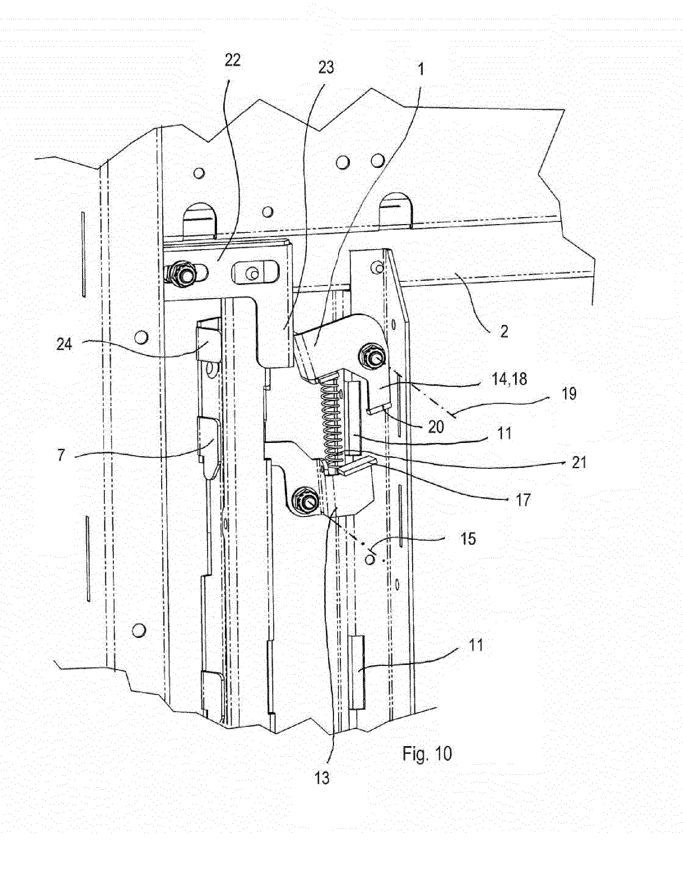

The obstruction-locking means comprises a rotary-obstruction-lever 13 pivotally connected to the casing 2 and rotatable around a first rotation axis 15 between an obstruction position (shown in Figure 10), in which prevents the hinged door 15 from closing the medium voltage compartment 3, and an extracted position (shown in Figures 1 and 7 to 9), in which the rotary-obstruction-lever 13 allows the hinged door 5 to be put in a respective closing position for hindering access to the medium voltage compartment 3. For "respective closing position" a position of the hinged door 5 is meant in which the first hooks 7 are received in the respective first seats 8 and are in a lowered position engaging with the latter.

The rotary-obstruction-lever 13 comprises an obstructing end 16 configured for obstructing, in the obstruction position, one of the first seats 8 obtained on the casing 2, so as to prevent a corresponding first hook 7 of the hinged door 5 from engaging with said first seat 8, thus not allowing the respective closing position to be achieved by the hinged door 5.

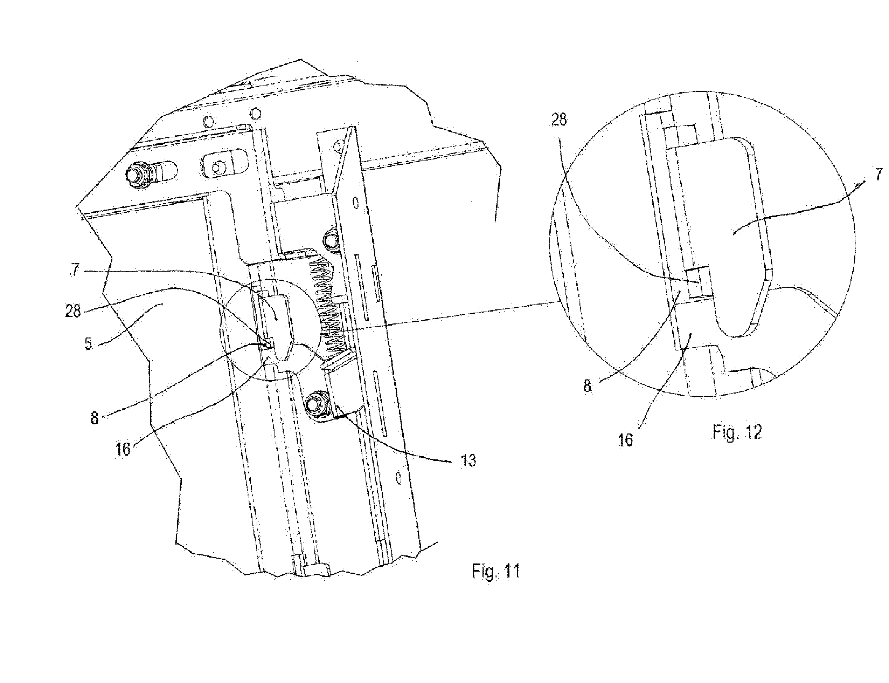

In particular, as better shown in Figures 11 and 12, the obstructing end 16 is configured for mechanically interfering with a tooth portion 28 which is integral with the hinged door 5. With the rotary-obstruction-lever 13 in the obstruction position, the tooth portion 28 rests against the obstructing end 16 and lowering of the hinged door 5 is no possible. Therefore, the hinged door 5, although it is set ajar, is kept in a raised position thus leaving the medium voltage compartment 3 still not closed.

The rotary-obstruction-lever 13 further comprises a push-portion 17 configured for receiving a pushing action by a second hook 10 of the removable cover 6, when this second hook 10 engages, in the closing position, with a respective second seat 11 of the casing 2, the rotary-obstruction-lever 13 being able to rotate, upon the pushing action, to the extracted position.

The block-locking-means 14 comprises a rotary-blocking-lever 18, pivotally connected to the casing 2, and rotatable around a second rotation axis 19. The second rotation axis 19 and the first rotation axis 15, in particular, are parallel to one other and orthogonal to a plane defined by the hinged door 15 when in the closing position.

The rotary-blocking-lever 18 comprises a blocking end 20 configured for going into contact with one of second hook 10 of the removable cover 6. The rotary-blocking-lever 18 is movable between a blocking position, in which the blocking end 20, by keeping the second hook 10 engaged with the respective second seat 11 blocks the removable cover 6 in the closing position, and a release position, in which the blocking end 20 is spaced away from the second hook 10 thus allowing opening of the removable cover 6.

The interlocking device 1 further comprises a spring element 21 which is configured for urging the rotary-obstruction-lever 13 in the obstruction position, and for urging the rotary-blocking-lever 18 in the release position. In particular, the spring element 21 mutually connects the rotary-obstruction-lever 13 and the rotary-blocking-lever 18. Specifically, opposite ends of the spring element 21 are connected to the rotary-obstruction-lever 13 and the rotary-blocking-lever 18 respectively.

The block-locking-means 14 further comprise a slide-blocking-element 22 configured for cooperating with the rotary-blocking-lever 18 and which is suitable for interacting with the safety-pin-group 9 which is operatively connected to the disconnector-switch. The slide-blocking-element 22 is slidable along a direction transversely with respect to the first rotation axis 15 or the second rotation axis 19, and comprises a pushing portion 23 configured for going in contact with the rotary-blocking lever 18. The slide-blocking-element 22 is slidable between a pushing position, in which the pushing-portion 23 pushes and keeps the rotary-blocking lever 18 in the blocking position, and a loosening position, in which the pushing portion 23 is so arranged as to enable the rotary-blocking lever 18 to rotate to the release position under the action of said spring element 21. The hinged door 5 is provided with a tang portion 24 (visible in Figures 8 and 10), which protrudes from the hinged vertical edge and is suitable for acting, when the hinged door 5 is rotated to the closing position, on the pushing portion 23 thus displacing the slide-blocking-element 22 towards the pushing position.

The slide-blocking-element 22 is connected to a horizontal frame portion of the casing 2 through slot-pin couplings 25 which enable, in particular, a horizontal sliding movement relative to the casing 2.

There are provided suitable spacer and washer elements for ensuring a correct sliding movement of the slide-blocking-element 22 relative to the casing 2.

On the slide-blocking-element 22 there is obtained a positioning-slot 26 which is shaped for interacting with a rear protruding portion of the above mentioned safety-pin-group 9.

With reference to Figure 2, the positioning-slot 26 has a "L" shape which is rotated by 90°, and comprises a first slot portion, horizontally extending in an upper zone, which is shaped for abutting against the safety-pin-group 9 when the latter is in the raised position (shown in Figure 2), so as to enable the slide-blocking-element 22 to be displaced in the loosening position by the rotary-blocking-lever 18 under the return action of the spring element 21. In particular, when the tang portion 24 is not acting on the pushing portion 23, meaning that the hinged door 5 is rotated away from the medium voltage compartment 3 in an opening position, an abutting end 27 of the rotary-blocking-lever 18, under the action of the spring element 21, presses on the pushing portion 23 of the slide-blocking-element 22 by keeping the latter in the loosening position.

The positioning-slot 26 further comprises a second slot portion, vertically extending downwards from the first slot portion, which is shaped for housing the safety-pin-group 9 in the lowered position so as to constrain the slide-blocking-element 22 in the pushing position.

Owing to the above discussed interlocking device 1, high safety conditions for the operator are achieved.

Even a rash or careless operator has no possibilities to open the removable cover 6 while the hinged door 5 is in the closing position, and thus he is prevented from accessing to components which are on load.

In particular, if opening of the removable cover 6 for accessing to the low voltage compartment 4 is desired, owing to the interlocking device 1, the operator is forced to first open the hinged door 5, which in turn requires to preliminarily put in the earthing status the switchgear by intervening on the disconnector-switch. Therefore, dislike what occurs in the prior art with the known safety screws associated with the removal cover which can be lost or forgot, owing to the interlocking device 1 accidental removal of the removable cover 6 when the hinged door 5 is closed and the switchgear is in service is avoided.

Conversely, the interlocking device 1 of the invention makes the operator unable to close the hinged door 5 and to put in service the switchgear unless he first puts the removable cover 6 back in the proper place closing the low voltage compartment 4. Only in this way, the obstruction-locking-lever 13, upon a downwards pushing action of the second hook 10, is rotated with the obstructing end 16 upwards so as to free the first seat 8 and so as to be spaced away from the tooth portion 28. In this way, the first seat 8 can receive the corresponding first hook 7 which can be lowered, thereby allowing to close the hinged door 5. Furthermore, with the hinged door 5 rotated close to the compartment, the tang portion 24 pushes the slide-blocking-element 22 towards the abutting end 27 of the rotary-blocking-lever 28, the latter rotating so as to lower the blocking end 20 against the second hook 10 which is thus blocked. The removable cover 6, therefore, can no longer be removed, unless the operator first opens the hinged door 5, as already above explained. Therefore, the overall safety conditions are increased, and opening/closing procedure are simplified and sped up as well. The interlocking device 1 above discussed therefore fully achieves the intended aim of providing a technical solution which makes a switchgear highly reliable and safer.

The interlocking device 1 is susceptible of modifications or variations all within the scope of the inventive concept as defined by the appended claims and including any combination of the above described embodiments; and any details may be replaced with technically equivalent elements.

One or more of the elements before described, may be differently shaped and/or positioned, can be realized in one or more pieces or differently coupled or positioned, etcetera. For example, instead of a hinged door 5, a further removable cover analogous to the removable cover 6 can be provided. On the other hand, a further hinged door similar to the hinged door 5 can be coupled with the low voltage compartment 4 instead of the removable cover 6.

## Claims

1. Interlocking device suitable for a switchgear having a first compartment (3) provided with a first closing element (5), and a second compartment (4) provided with a second closing element (6), **characterized in that** it comprises:
- obstruction-locking means (13) configured for preventing said first closing element (5) from closing said first compartment (3) if said second closing element (6) is not in a closing position in which access to said second compartment (4) is hindered, and
- block-locking means (14, 18, 22) operatively connected to said obstruction-locking means (13) and configured for blocking said second closing element (6) in said closing position if said first closing element (5) is in a respective closing position in which access to said first compartment (3) is hindered.

2. Interlocking device according to claim 1, wherein said obstruction-locking means comprises a rotary-obstruction-lever (13) pivotally connectable to a casing portion of said switchgear, said rotary-obstruction-lever (13) being rotatable around a first rotation axis (15) between an obstruction position, in which prevents said first closing element (5) from reaching said respective closing position, and an extracted position, in which said rotary-obstruction-lever (13) allows said first closing element (5) to be put in said respective closing position.

3. Interlocking device according to claim 2, wherein said rotary-obstruction-lever (13) comprises an obstructing end (16) configured for obstructing, in said obstruction position, first seat means (8) obtained on said casing portion so as to prevent first hook means (7) provided on said first closing element (5) from engaging with said first seat means (8), thus not allowing said first closing element (5) to reach said respective closing position.

4. Interlocking device according to claim 3, wherein said obstructing end (16) is configured for mechanically interfering with a tooth portion (28) of said first closing element (5) so as to prevent, in said obstruction position, lowering of said tooth portion (28).

5. Interlocking device according to claim 3 or 4, wherein said rotary-obstruction-lever (13) comprises a push-portion (17) configured for receiving a pushing action by second hook means (10) of said second closing element (6) when said second hook means (10) engage, in said closing position, with second seat means (11) obtained on said casing portion, said rotary-obstruction-lever (13) being able to rotate, upon said pushing action, to said extracted position.

6. Interlocking device according to claim 5, wherein said block-locking-means comprises a rotary-blocking-lever (18), pivotally connectable to said casing portion, and rotatable around a second rotation axis (19) between a blocking position, in which a blocking end (20) of said rotary-blocking-lever (18) blocks said second closing element (6) in said closing position by keeping said second hook means (10) engaged with said second seat means (11), and a release position, in which said blocking end (20) is spaced away from said second hook means (10) thus allowing opening of said second closing element (6).

7. Interlocking device according to claim 6, further comprising elastic means (21) configured for urging said rotary-obstruction-lever (13) to said obstruction position, and said rotary-blocking-lever (18) to said release position.

8. Interlocking device according to claim 7, wherein said elastic means comprises spring means (21) connecting said rotary-obstruction-lever (13) and said rotary-blocking-lever (18) to one other.

9. Interlocking device according to claim 8, wherein said block-locking-means further comprise a slide-blocking-element (22) which is configured for cooperating with said rotary-blocking-lever (18) and which is suitable for interacting with a vertically movable safety-pin-group (9) which is drivable by an operating mechanism of a disconnector-switch included in said switchgear.

10. Interlocking device according to claim 9, wherein said slide-blocking-element (22) is slidable between a pushing position, in which a pushing-portion (23) of said slide-blocking-element (22) pushes and keeps said rotary-blocking lever (18) in said blocking position, and a loosening position, in which said slide-blocking-element (22) enables said rotary-blocking lever (18) to reach said release position under the action of said spring means (21).

11. Interlocking device according to claim 10, wherein said pushing-portion (23) is configured for being displaced towards said pushing position by a tang portion (24) protruding from said first closing element (5).

12. Interlocking device according to claim 11, wherein said rotary-obstruction-lever (13) and said rotary-blocking-lever (18) are arranged so that said first rotation axis (15) and said second rotation axis (19) result parallel to one other, said slide-blocking-element (22) being slideably connectable to said casing portion through slot-pin couplings (25) so as to be movable along a slide direction transversely to said first rotation axis (15) and to said second rotation axis (19).

13. Interlocking device according to one or more of preceding claims, wherein on said slide-blocking-element (22) there is obtained a positioning-slot (26) which is shaped for interacting with said safety-pin-group (9) which is movable between a raised position, corresponding to an electrical earthing configuration enabled by said disconnector-switch, and a lowered position, corresponding to an in-service-configuration of said switchgear, said safety-pin-group (9) preventing, in said lowered position, lifting up and opening of said first closing element (5).

14. Interlocking device according to claim 13, wherein said positioning-slot (26) comprises a first slot portion suitable for abutting against said safety-pin-group (9) in said raised position so that said slide-blocking-element (22) is displaced in said loosening position by said rotary-blocking-lever (18) under the action of said spring means (21), and a second slot portion which is shaped for engaging with said safety-pin-group (9) in said lowered position so as to constrain said slide-blocking-element (22) in said pushing position.

15. Switchgear casing suitable for housing a circuit breaker and a disconnector-switch, comprising:
- a first compartment (3) suitable for containing one or more first electrical and/or electronic devices provided with a first closing element comprising a hinged door (5);
- and a second compartment (4) suitable for containing one or more second electrical and/or electronic devices, provided with a second closing element comprising a removable cover (6), and
- an interlocking device (1) according to one or more of the preceding claims.

16. Switchgear apparatus comprising a circuit breaker, a disconnector-switch and an interlocking device (1) according to one of claims 1 to 14.

## Patentansprüche

1. Verschlussvorrichtung, die für eine Schaltanlage geeignet ist, die ein mit einem ersten Schließelement (5) versehenes erstes Abteil (3) und ein mit einem zweiten Schließelement (6) versehenes zweites Abteil (4) aufweist, **dadurch gekennzeichnet, dass** sie aufweist:
- Versperr-Verriegelungsmittel (13), die dazu ausgebildet sind, zu verhindern, dass das erste Schließelement (5) das erste Abteil (3) schließt, wenn das zweite Schließelement (6) nicht in einer Schließstellung ist, in der ein Zugang zu dem zweiten Abteil (4) gehindert ist, und
- Blockier-Verriegelungsmittel (14, 18, 22), die mit den Versperr-Verriegelungsmitteln (13) wirkverbunden und dazu ausgebildet sind, das zweite Schließelement (6) in der Schließstellung zu blockieren, wenn das erste Schließelement (5) in einer entsprechenden Schließstellung ist, in der ein Zugang zu dem ersten Abteil (3) gehindert ist.

2. Verschlussvorrichtung nach Anspruch 1, wobei die Versperr-Verriegelungsmittel einen Dreh-Versperr-Hebel (13) aufweisen, der mit einem Gehäuseabschnitt der Schaltanlage schwenkbar verbindbar ist, wobei der Dreh-Versperr-Hebel (13) um eine erste Drehachse (15) zwischen einer Versperrstellung, in der er verhindert, dass das erste Schließelement (5) die entsprechende Schließstellung erreicht, und einer herausgezogenen Stellung drehbar ist, in der es der Dreh-Versperr-Hebel (13) ermöglicht, dass das erste Schließelement (5) in die entsprechende Schließstellung gebracht wird.

3. Verschlussvorrichtung nach Anspruch 2, wobei der Dreh-Versperr-Hebel (13) ein versperrendes Ende (16) aufweist, das dazu ausgebildet ist, erste Aufnahmemittel (8), die an dem Gehäuseabschnitt erhalten sind, in der Versperrstellung zu versperren, um so zu vermeiden, dass erste Hakenmittel (7), die an dem ersten Schließelement (5) vorgesehen sind, mit den ersten Aufnahmemitteln (8) in Eingriff kommen, so dass das erste Schließelement (5) die entsprechende Schließstellung nicht erreichen kann.

4. Verschlussvorrichtung nach Anspruch 3, wobei das versperrende Ende (16) dazu ausgebildet ist, mechanisch mit einem Zahnabschnitt (28) des ersten Schließelementes (5) zu interferieren, um so in der Versperrstellung zu vermeiden, dass sich der Zahnabschnitt (28) absenkt.

5. Verschlussvorrichtung nach Anspruch 3 oder 4, wobei der Dreh-Versperr-Hebel (13) einen Schubabschnitt (17) aufweist, der dazu ausgebildet ist, eine Schubaktion von zweiten Hakenmitteln (10) des zweiten Schließelementes (6) aufzunehmen, wenn die zweiten Hakenmittel (10) in der Schließstellung mit zweiten Aufnahmemitteln (11) in Eingriff kommen, die an dem Gehäuseabschnitt erhalten sind, wobei der Dreh-Versperr-Hebel (13) sich auf die Schubaktion hin in die herausgezogene Stellung drehen kann.

6. Verschlussvorrichtung nach Anspruch 5, wobei die Blockier-Verriegelungsmittel einen Dreh-Blockier-Hebel aufweisen, der mit dem Gehäuseabschnitt schwenkbar verbindbar und um eine zweite Drehachse (19) zwischen einer Blockierstellung, in der ein blockierendes Ende (20) des Dreh-Blockier-Hebels (18) das zweite Schließelement (6) in der Schließposition durch In-Eingriff-Halten der zweiten Hakenmittel (10) mit den zweiten Aufnahmemitteln (11) blockiert, und einer Freigabestellung drehbar ist, in der das blockierende Ende (20) von den zweiten Hakenmitteln (10) beabstandet ist, so dass das zweite Schließelement (6) öffnen kann.

7. Verschlussvorrichtung nach Anspruch 6, weiterhin mit elastischen Mitteln (21), die dazu ausgebildet sind, den Dreh-Versperr-Hebel (13) in die Versperrstellung und den Dreh-Blockier-Hebel (18) in die Freigabestellung zu zwingen.

8. Verschlussvorrichtung nach Anspruch 7, wobei die elastischen Mittel Federmittel (21) aufweisen, die den Dreh-Versperr-Hebel (13) und den Dreh-Blockier-Hebel (18) miteinander verbinden.

9. Verschlussvorrichtung nach Anspruch 8, wobei die Blockier-Verriegelungsmittel weiterhin ein Schieber-Blockier-Element (22) aufweisen, das dazu ausgebildet ist, mit dem Dreh-Blockier-Hebel (18) zusammenzuwirken, und geeignet ist, mit einer vertikal beweglichen Sicherheits-Stift-Gruppe (9) zusammenzuwirken, die durch einen Betätigungsmechanismus eines in der Schaltanlage enthaltenen Trennschalters antreibbar ist.

10. Verschlussvorrichtung nach Anspruch 9, wobei das Schieber-Blockier-Element (22) zwischen einer Schubstellung, in der ein Schubabschnitt (23) des Schieber-Blockier-Elements (22) den Dreh-Blockier-Hebel (18) in die Blockierstellung drückt und dort hält, und einer Lösestellung verschiebbar ist, in der das Schieber-Blockier-Element (22) es ermöglicht, dass der Dreh-Blockier-Hebel (18) die Freigabestellung unter der Wirkung der Federmittel (21) erreicht.

11. Verschlussvorrichtung nach Anspruch 10, wobei der Schubabschnitt (23) dazu ausgebildet ist, durch einen Zungenabschnitt (24) zur Schubstellung hin verlagert zu werden, der von dem ersten Schließelement (5) vorspringt.

12. Verschlussvorrichtung nach Anspruch 11, wobei der Dreh-Versperr-Hebel (13) und der Dreh-Blockier-Hebel (18) so angeordnet sind, dass die erste Drehachse (15) und die zweite Drehachse (19) parallel zueinander verlaufen, wobei das Schieber-Blockier-Element (22) verschiebbar mit dem Gehäuseabschnitt durch Schlitz-Stift-Kupplungen (25) verbindbar ist, um so entlang einer Schieberichtung quer zur ersten Drehachse (15) und zur zweiten Drehachse (19) beweglich zu sein.

13. Verschlussvorrichtung nach einem oder mehreren der vorhergehenden Ansprüche, wobei an dem Schieber-Blockier-Element (22) ein Positionier-Schlitz (26) erhalten ist, der zum Wechselwirken mit der Sicherheits-Stift-Gruppe (9) geformt ist, die zwischen einer angehobenen Stellung, die einer elektrischen Erdungskonfiguration entspricht, die durch den Trennschalter ermöglicht ist, und einer abgesenkten Stellung beweglich ist, die einer In-Betrieb-Konfiguration der Schaltanlage entspricht, wobei die Sicherheits-Stift-Gruppe (9) in der abgesenkten Stellung ein Anheben und Öffnen des ersten Schließelementes (5) verhindert.

14. Verschlussvorrichtung nach Anspruch 13, wobei der Positionier-Schlitz (26) einen ersten Schlitzabschnitt, der zum Anliegen gegen die Sicherheits-Stift-Gruppe (9) in der angehobenen Stellung geeignet ist, so dass das Schieber-Blockier-Element (22) durch den Dreh-Blockier-Hebel (18) unter der Wirkung der Federmittel (21) in die Lösestellung verlagert ist, und einen zweiten Schlitzabschnitt aufweist, der zum In-Eingriff-Kommen mit der Sicherheits-Stift-Gruppe (9) in der abgesenkten Stellung geformt ist, um so das Schieber-Blockier-Element (22) in der Schubstellung zwangszuhalten.

15. Schaltanlagengehäuse, das zum Einhäusen eines Unterbrechers und eines Trennschalters geeignet ist, mit:
- einem ersten Abteil (3), das zum Beinhalten einer oder mehrerer erster elektrischer und/oder elektronischer Vorrichtungen geeignet und mit einem ersten Schließelement versehen ist, das eine Klapptür (5) aufweist;
- und einem zweiten Abteil (4), das zum Beinhalten eines oder mehrerer zweiter elektrischer und/oder elektronischer Vorrichtungen geeignet ist, und das mit einem zweiten Schließelement versehen ist, das einen abnehmbaren Deckel (6) aufweist; und
- einer Verschlussvorrichtung (1) nach einem oder mehreren der vorhergehenden Ansprüche.

16. Schaltanlagenvorrichtung, mit einem Unterbrecher, einem Trennschalter und einer Verschlussvorrichtung (1) nach einem der Ansprüche 1 bis 14.

## Revendications

1. Dispositif de verrouillage réciproque adapté pour un appareillage de commutation ayant un premier compartiment (3) pourvu d'un premier élément de fermeture (5), et un second compartiment (4) pourvu d'un second élément de fermeture (6), **caractérisé en ce qu'**il comprend:
- des moyens de verrouillage par obstruction (13) conçus pour empêcher ledit premier élément de fermeture (5) de fermer ledit premier compartiment (3) si ledit second élément de fermeture (6) n'est pas dans une position de fermeture dans laquelle l'accès audit second compartiment (4) est entravé, et
- des moyens de verrouillage par blocage (14, 18, 22) reliés fonctionnellement auxdits moyens de verrouillage par obstruction (13) et conçus pour bloquer ledit second élément de fermeture (6) dans ladite position de fermeture si ledit premier élément de fermeture (5) est dans une position de fermeture respective dans laquelle l'accès audit premier compartiment (3) est entravé.

2. Dispositif de verrouillage réciproque selon la revendication 1, dans lequel lesdits moyens de verrouillage par obstruction comprennent un levier d'obstruction rotatif (13) qui peut être relié de façon pivotante à une portion de boîtier dudit appareillage de commutation, ledit levier d'obstruction rotatif (13) étant mobile en rotation autour d'un premier axe de rotation (15) entre une position d'obstruction, dans laquelle il empêche ledit premier élément de fermeture (5) d'atteindre ladite position de fermeture respective, et une position sortie, dans laquelle ledit levier d'obstruction rotatif (13) permet audit premier élément de fermeture (5) d'être mis dans ladite position de fermeture respective.

3. Dispositif de verrouillage réciproque selon la revendication 2, dans lequel ledit levier d'obstruction rotatif (13) comprend une extrémité d'obstruction (16) conçue pour obstruer, dans ladite position d'obstruction, le premier dispositif de portée (8) obtenu sur ladite portion de boîtier afin d'empêcher le premier moyen d'accrochage (7) prévu sur ledit premier élément de fermeture (5) d'engager ledit premier moyen d'assise (8), empêchant ainsi ledit premier élément de fermeture (5) d'atteindre ladite position de fermeture respective.

4. Dispositif de verrouillage réciproque selon la revendication 3, dans lequel ladite extrémité d'obstruction (16) est conçue pour interférer mécaniquement avec une portion dentée (28) dudit premier élément de fermeture (5) afin d'empêcher, dans ladite position d'obstruction, l'abaissement de ladite portion dentée (28).

5. Dispositif de verrouillage réciproque selon la revendication 3 ou 4, dans lequel ledit levier d'obstruction rotatif (13) comprend une portion à pousser (17) conçue pour recevoir une action de poussée par le second moyen d'accrochage (10) dudit second élément de fermeture (6) lorsque ledit moyen d'accrochage (10) s'engage, dans ladite position de fermeture, avec le second moyen d'assise (11) obtenu sur ladite portion de boîtier, ledit levier d'obstruction rotatif (13) pouvant faire une rotation, sur ladite action de poussée, à ladite position sortie.

6. Dispositif de verrouillage réciproque selon la revendication 5, dans lequel ledit moyen de verrouillage par blocage comprend un levier de blocage rotatif (18), qui peut être relié de façon pivotante à ladite portion de boîtier, et mobile en rotation autour d'un second axe de rotation (19) entre une position de blocage, dans laquelle une extrémité bloquante (20) dudit levier de blocage rotatif (18) bloque ledit second élément de fermeture (6) dans ladite position de fermeture en maintenant ledit second moyen d'accrochage (10) engagé avec ledit second moyen d'assise (11), et une position de désengagement, dans laquelle ladite extrémité bloquante (20) est maintenue éloignée dudit second moyen d'accrochage (10) permettant ainsi l'ouverture dudit second élément de fermeture (6)

7. Dispositif de verrouillage réciproque selon la revendication 6, comprenant en outre un moyen élastique (21) conçu pour attirer ledit levier d'obstruction rotatif (13) vers ladite position d'obstruction, et ledit levier de blocage rotatif (18) vers ladite position de désengagement.

8. Dispositif de verrouillage réciproque selon la revendication 7, dans lequel ledit moyen élastique comprend un ressort (21) qui relie ledit levier d'obstruction rotatif (13) et ledit levier de blocage rotatif (18) entre eux.

9. Dispositif de verrouillage réciproque selon la revendication 8, dans lequel ledit moyen de verrouillage par blocage comprend en plus un élément coulissant de blocage (22) qui est conçu pour coopérer avec ledit levier de blocage rotatif (18) et qui est adapté pour interagir avec un ensemble d'ergot à sécurité (9) qui peut se déplacer verticalement et qui est actionnable par un mécanisme de commande d'un commutateur de déconnexion inclus dans ledit appareillage de commutation.

10. Dispositif de verrouillage réciproque selon la revendication 9, dans lequel ledit élément coulissant de blocage (22) est coulissant entre une position de poussée, dans laquelle une portion de poussée (23) dudit élément coulissant de blocage (22) pousse et maintient ledit levier de blocage rotatif (18) dans ladite position de blocage, et une position de désengagement, dans laquelle ledit élément coulissant de blocage (22) permet audit levier de blocage rotatif (18) d'atteindre ladite position de désengagement sous l'action dudit ressort (21).

11. Dispositif de verrouillage réciproque selon la revendication 10, dans lequel ladite portion de poussée (23) est conçue pour être déplacée vers ladite position de poussée par une portion à languette (24) en saillie dudit premier élément de fermeture (5).

12. Dispositif de verrouillage réciproque selon la revendication 11, dans lequel ledit levier d'obstruction rotatif (13) et ledit levier de blocage rotatif (18) sont agencés de façon que ledit premier axe de rotation (15) et ledit second axe de rotation (19) sont parallèles l'un par rapport à l'autre, ledit élément coulissant de blocage (22) pouvant être relié de façon coulissante à ladite portion de boîtier par des couplages fentes-broches (25) de façon à pouvoir se déplacer dans la direction de coulissement transversalement audit premier axe de rotation (15) et audit second axe de rotation (19).

13. Dispositif de verrouillage réciproque selon l'une ou plusieurs des revendications précédentes, dans lequel sur ledit élément coulissant de blocage (22) est obtenue une fente de positionnement (26) qui est formée pour interagir avec ledit ensemble d'ergot à sécurité (9) qui est déplaçable entre une position relevée, correspondant à une configuration de mise à la terre électrique activée par ledit commutateur de déconnexion, et une position abaissée, correspondant à une configuration en service dudit appareillage de commutation, ledit ensemble d'ergot à sécurité (9) empêchant, dans ladite position abaissée, la remontée et l'ouverture dudit premier élément de fermeture (5).

14. Dispositif de verrouillage réciproque selon la revendication 13, dans lequel ladite fente de positionnement (26) comprend une première portion de fente adaptée pour venir en appui contre ledit ensemble d'ergot à sécurité (9) dans ladite position relevée de façon que ledit élément coulissant de blocage (22) est déplacé dans ladite position de désengagement par ledit levier de blocage rotatif (18) sous l'action dudit ressort (21), et une seconde portion de fente qui est formée pour engager avec ledit ensemble d'ergot à sécurité (9) dans ladite position abaissée afin de contraindre ledit élément coulissant de blocage (22) dans ladite position de poussée.

15. Boîtier d'appareillage de commutation adapté pour loger un disjoncteur et un commutateur de déconnexion, comprenant:
- un premier compartiment (3) adapté pour contenir un ou plusieurs premiers dispositifs électriques et/ou électroniques pourvu d'un premier élément de fermeture comprenant une porte à charnières (5);
- et un second compartiment (4) adapté pour contenir un ou plusieurs seconds dispositifs électriques et/ou électroniques, pourvu d'un second élément de fermeture comprenant un capot démontable (6), et
- un dispositif de verrouillage réciproque (1) selon l'une ou plusieurs des revendications précédentes.

16. Appareillage de commutation comprenant un disjoncteur, un commutateur de déconnexion et un dispositif de verrouillage réciproque (1) selon l'une des revendications 1 à 14.
